# EUROPÄISCHE PATENTANMELDUNG

(11) **EP 2 952 325 A1**
(43) Veröffentlichungstag der Anmeldung: **09.12.2015**
(21) Anmeldenummer: 15170250.3
(22) Anmeldetag: 02.06.2015
(51) Int. Cl.: B29C 45/27

(54) **EINSPRITZDÜSE ZUM EINBRINGEN VON SPRITZGUT IN EINE SPRITZGUSSFORM**

(30) Priorität: 02.06.2014 DE 102014210332
(71) Anmelder: awetis engineering+manufacturing GmbH, 69514 Laudenbach (DE)
(72) Erfinder: PÜHRINGER, Michael, 4131 Obermühl (AT)
(74) Vertreter: Herzog, Fiesser & Partner Patentanwälte PartG mbB

(57) **Zusammenfassung**

Es wird eine Einspritzdüse (50) zum Einbringen von Spritzgut in eine Spritzgußform (10) vorgeschlagen. Die Einspritzdüse (50) weist einen Düsenkörper (52) und eine Düsenspitze (54) auf, wobei die Düsenspitze (54) mit dem Düsenkörper (52) formschlüssig verbunden ist.

Es wird weiterhin eine Spritzgußform (10) für Spritzgut mit mindestens einer Formplatte (12), die einen Einspritzkanal (46) aufweist, der in einer Einspritzöffnung (48) mündet, und mit einer solchen Einspritzdüse (50) vorgeschlagen.

## Beschreibung

### Gebiet der Erfindung

Die Erfindung betrifft eine Einspritzdüse zum Einbringen von Spritzgut, insbesondere von Kunststoffmaterial, beispielsweise Elastomere, in eine Spritzgußform und eine Spritzgußform für Spritzgut. Derartige Einspritzdüsen werden beispielsweise bei Spritzgußformen zur Erzeugung eines Formlings, beispielsweise bei der Herstellung von Kunststoffteilen, verwendet, insbesondere unter Verwendung von Elastomerwerkstoffen. Auch andere Einsatzgebiete sind jedoch denkbar.

### Stand der Technik

Aus dem Stand der Technik ist eine Vielzahl von Einspritzdüsen zum Einbringen von Spritzgut in eine Spritzgußform bekannt. Derartige Einspritzdüsen werden in der Regel in einer Spritzgußform verwendet. In der Spritzgußform wird das Spritzgut, beispielsweise ein Kunststoffmaterial, über eine Zuführvorrichtung, beispielsweise über einen Extruder, der Einspritzdüse zugeführt. Die Einspritzdüse weist in der Regel einen Fließkanal im Inneren eines Düsenkörpers auf, der mit der Zuführvorrichtung an einem Ende verbunden ist, so dass das Spritzgut von der Zuführvorrichtung durch den Fließkanal und eine Anspritzbohrung der Düsenspitze fließt. An dem anderen Ende des Fließkanals ist in der Regel eine Düsenspitze angeordnet, durch welche das Spritzgut aus der Einspritzdüse in einen Einspritzkanal einer Formplatte der Spritzgußform eintritt.

Die EP 1 029 647 B1 und EP 0 710 535 A1 beschreiben jeweils Einspritzdüsen, bei denen der Düsenkörper und die Düsenspitze einteilig ausgebildet sind.

Aus verschiedenen Gründen kann es von Interesse sein, die Düsenspitze zu wechseln. Beispielsweise ist ein Wechsel der Düsenspitze aufgrund von Verschleiß oder eines gewünschten Änderung der Geometrie, wie beispielsweise des Querschnitts der Anspritzbohrung der Düsenspitze, wünschenswert. Dies ist bei den Einspritzdüsen der EP 1 029 647 B1 und EP 0 710 535 A1 aufgrund der einteiligen Ausbildung des Düsenkörpers und der Düsenspitze nicht möglich.

Die AT 002 059 U1 beschreibt eine Einspritzdüse mit einem Düsenkörper und einer axial dazu verschiebbaren Verschleißspitze. Zwischen dem Düsenkörper und der Verschleißspitze ist eine Tellerfeder angeordnet, die die Verschleißspitze ständig gegen eine Anlagefläche einer Formplatte drückt.

Nachteilig dabei ist, dass aufgrund der Tellerfeder keine dichte Verbindung zwischen dem Düsenkörper und der Düsenspitze besteht.

### Aufgabe der Erfindung

Es ist daher Aufgabe der vorliegenden Erfindung, eine Einspritzdüse zum Einbringen von Spritzgut in eine Spritzgußform und eine Spritzgußform für Spritzgut bereitzustellen, welche die Nachteile bekannter Einspritzdüsen und Spritzgußformen zumindest weitgehend vermeiden. Insbesondere soll eine Einspritzdüse bereitgestellt werden, bei der sich die Düsenspitze wechseln lässt und dennoch der Düsenkörper und die Düsenspitze zueinander abgedichtet sind.

### Offenbarung der Erfindung

Diese Aufgabe wird gelöst durch eine Einspritzdüse und eine Spritzgußform mit den Merkmalen der unabhängigen Patentansprüche. Bevorzugte Ausgestaltungen, welche einzeln oder in Kombination realisierbar sind, sind in den abhängigen Ansprüchen dargestellt. Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben dem durch diese Begriffe eingeführten Merkmal, keine weiteren Merkmale vorhanden sind oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht) als auch auf die Situation, in welcher, zusätzlich zu B, ein oder mehrere weitere Elemente in A vorhanden sind, beispielsweise Element C, Elemente C und D oder sogar weitere Elemente.

Eine erfindungsgemäße Einspritzdüse zum Einbringen von Spritzgut in eine Spritzgußform weist einen Düsenkörper und eine Düsenspitze auf. Die Düsenspitze ist mit dem Düsenkörper formschlüssig verbunden.

Ein Spritzgut kann im Rahmen der vorliegenden Erfindung allgemein eine beliebige einspritzbare Masse sein, also eine verformbare Substanz oder ein verformbares Substanzgemisch. Insbesondere kann es sich um eine zähe Masse handeln, mit Viskositäten von etwa 1 bis 100 kPa*s. Insbesondere kann das Spritzgut eine Kunststoffmasse sein oder umfassen und/oder kann eine Masse sein, die eine oder mehrere Substanzen enthält, die sich zu einem oder mehreren Kunststoffen verbinden können und/oder die reagieren können, um einen oder mehrere Kunststoffe zu erzeugen. Insbesondere kann das Spritzgut einen noch nicht vernetzten oder zumindest noch nicht vollständig vernetzten Kunststoff umfassen und/oder eine Kunststoff-Rohmasse. So kann das Spritzgut insbesondere ein noch nicht vulkanisiertes Elastomer oder ein zumindest noch nicht vollständig vulkanisiertes Elastomer umfassen. Bei dem Spritzgut handelt es sich bevorzugt um plastische wärmehärtbare. Wärmehärtbare Materialien im Sinne der vorliegenden Erfindung sind im wesentlichen Kunststoffe, die sich bei höheren Temperaturen verfestigen, oder vulkanisierende, elastomere Materialien, wie etwa Silikone, Kautschuk oder Gummi. Solche Kunststoffe werden bei der Verarbeitung bei niedriger Temperatur über eine Einspritzdüse in ein Formnest gespritzt, und vulkanisieren dort unter Wärmeeinfluß zum gewünschten Spritzgußteil aus.

Unter einer formschlüssigen Verbindung ist im Rahmen der vorliegenden Erfindung eine Verbindung zu verstehen, die durch das Ineinandergreifen von mindestens zwei Verbindungspartnern entsteht. Dadurch können sich die Verbindungspartner auch ohne oder bei unterbrochener Kraftübertragung nicht lösen. Anders ausgedrückt ist bei einer formschlüssigen Verbindung der eine Verbindungspartner dem anderen im Weg. Bei Betriebsbelastung wirken Druckkräfte normal, das heißt rechtwinklig zu den Flächen der Verbindungspartner. Solche "Sperrungen" kommen in mindestens einer Richtung vor. Ist ein zweites Flächenpaar gegenüber angeordnet, ist auch die Gegenrichtung gesperrt. Im Rahmen der vorliegenden Erfindung verhindert eine formschlüssige Verbindung eines Düsenkörpers und einer Düsenspitze eine translatorische Bewegung der Düsenspitze und des Düsenkörpers zueinander in einer axialen Richtung bezüglich einer Zufuhrkanalachse eines Zufuhrkanals des Düsenkörpers und einer Längsachse der Düsenspitze. Da die Zufuhrkanalachse und die Längsachse in einem verbundenen Zustand der Düsenspitze und des Düsenkörpers zusammenfallen bzw. sich überlappen, wird durch die formschlüssige Verbindung der Düsenspitze und des Düsenkörpers eine Bewegung in einer rein axialen Richtung bezüglich der Zufuhrkanalachse und der Längsachse verhindert.

Insbesondere kann die Düsenspitze mit dem Düsenkörper mittels einer Schraubverbindung verbunden sein. Beispielsweise ist die Düsenspitze in den Düsenkörper eingeschraubt. Dadurch ist die Düsenspitze mit dem Düsenkörper gasdicht verbunden.

Die Düsenspitze kann einen Außenumfang mit mehreren zylindrischen Flächen aufweisen. Bevorzugt sind die mehreren zylindrischen Flächen zum Positionieren der Düsenspitze in einer Formplatte der Spritzgußform ausgebildet. Dadurch lässt sich der Düsenkörper mittels der Düsenspitze in einer Formplatte einer Spritzgußform positionieren. Insbesondere kann sich die Düsenspitze entlang einer Längsachse erstrecken. Die mehreren zylindrischen Flächen können entlang der Längsachse verteilt angeordnet sein.

Die Düsenspitze kann ein dem Düsenkörper abgewandtes Vorderende aufweisen. Das Vorderende kann kegelförmig ausgebildet sein. Bevorzugt ist das Vorderende der Düsenspitze zum formschlüssigen Anliegen an eine Formplatte der Spritzgußform ausgebildet.

Die Düsenspitze kann zum Zuführen des Spritzguts in die Spritzgußform eine Bohrung aufweisen. Die Bohrung kann mindestens einen ersten Durchmesser und einen zweiten Durchmesser aufweisen. Der erste Durchmesser kann größer als der zweite Durchmesser sein. Die Düsenspitze kann mindestens einen hinteren Abschnitt und einen vorderen Abschnitt aufweisen. Der hintere Abschnitt kann innerhalb des Düsenkörpers angeordnet sein und der vordere Abschnitt kann außerhalb des Düsenkörpers angeordnet sein. Dadurch lässt sich eine besonders gut abgedichtete formschlüssige Verbindung des Düsenkörpers und der Düsenspitze realisieren. Bevorzugt ist dann der erste Durchmesser der Bohrung in dem hinteren Abschnitt angeordnet und ist der zweite Durchmesser in dem vorderen Abschnitt angeordnet.

Der Düsenkörper kann einen Zufuhrkanal zum Zuführen des Spritzguts zu der Düsenspitze aufweisen. In dem Zufuhrkanal kann eine Nadel angeordnet sein. Die Düsenspitze kann so ausgebildet sein, dass die Bohrung mittels der Nadel wahlweise verschließbar oder freigebbar ist. Der Zufuhrkanal kann sich entlang einer Zufuhrkanalachse erstrecken. Die Nadel kann axial bezüglich der Zufuhrkanalachse verschiebbar sein.

Die Einspritzdüse kann so ausgebildet sein, dass die Einspritzdüse ortsfest in einer Düsenhalteplatte der Spritzgußform gehalten ist. Der Düsenkörper kann einen Anschlag aufweisen, der zum Eingreifen in eine in der Düsenplatte der Spritzgußform ausgebildete Nut ausgebildet ist. Dadurch wird eine Verdrehsicherung realisiert, die dafür sorgt, dass der Düsenkörper lagegesichert und positioniert ist. Hiermit wird sichergestellt, dass der Düsenkörper beim Herausschrauben der Düsenspitze nicht um die Zufuhrkanalachse verdreht wird und Kühlbohrungen des Düsenkörpers und der Düsenhalteplatte zueinander lagerichtig positioniert bleiben.

Die Einspritzdüse kann mindestens eine Dichtung aufweisen. Die Dichtung kann an einem der Düsenspitze abgewandten Hinterende des Düsenkörpers angeordnet sein. Die Dichtung kann zum Vorspannen der Einspritzdüse in Richtung zu einer Formplatte der Spritzgußform ausgebildet sein. Dadurch kann eine Vorspannung erzeugt werden, die den Düsenkörper in Richtung zu einer Formplatte einer Spritzgußform vorspannt, wodurch sichergestellt wird, dass die Düsenspitze in Anlage an die Formplatte kommt.

Der Düsenkörper kann einen Kernteil und eine Hülse aufweist. Der Kernteil kann in der Hülse angeordnet sein und mit dieser verbunden, insbesondere unlösbar verbunden, sein. Dies erleichtert die Herstellung des Düsenkörpers.

Der Düsenkörper kann mindestens einen Kühlkanal aufweisen. Bevorzugt ist der Kühlkanal in Form einer doppelgängigen Kühlspirale ausgebildet. Beispielsweise ist der Kühlkanal von einer Nut gebildet, die in einer Außenfläche des Kernteils ausgebildet ist. Die Nut ist dann nach außen von der Hülse verschlossen. Dadurch wird ein vorzeitiges Ausvulkanisieren des Spritzguts im Inneren des Düsenkörpers verhindert.

Eine erfindungsgemäße Spritzgußform für Spritzgut weist mindestens eine Formplatte auf. Die Formplatte weist einen Einspritzkanal auf, der in einer Einspritzöffnung mündet. Die Spritzgußform weist weiterhin eine Einspritzdüse nach einer der oben beschriebenen Ausführungsformen auf.

Unter einer Spritzgußform ist eine Vorrichtung mit mindestens einem Hohlraum, auch Formnest oder Kavität genannt, zu verstehen, welche eingerichtet ist, das Spritzgut zu formen. Der Hohlraum kann von einer oder mehreren Formplatten begrenzt werden. Die Form der Spritzgußform kann grundsätzlich beliebig ausgestaltet werden, wobei das Formnest beispielsweise an den zu formenden Gegenstand angepasst werden kann. Weiter kann die Spritzgußform beispielsweise temperiert werden, beispielsweise auf eine Temperatur aufgeheizt werden, bei der eine Vulkanisation des Spritzgutes erfolgt, damit das Spritzgut in dem Formwerkzeug vulkanisieren kann.

Das Formnest kann mit der oben beschriebenen Einspritzöffnung in Verbindung stehen. Die Spritzgußform weist somit mindestens einen Einlass zum Eintritt des Spritzgutes und mindestens ein mit dem Einlass verbundenes Formnest auf. Unter einem Formnest kann, wie oben erwähnt, ein beliebig ausgestalteter Hohlraum verstanden werden. Beispielsweise kann die Spritzgußform ein Vulkanisationswerkzeug sein oder ein Vulkanisationswerkzeug umfassen, in welchem eine endgültige Vernetzung des Spritzguts stattfinden kann. Eine Vernetzung des Spritzguts in dem Vulkanisationswerkzeug kann durch Beheizen des Vulkanisationswerkzeugs auf zumindest eine Vernetzungstemperatur ermöglicht werden.

Die Einspritzdüse kann gegenüber der Formplatte isoliert sein. Dadurch wird ein vorzeitiges Ausvulkanisieren des Spritzguts im Inneren der Düsenspitze verhindert.

Die Formplatte kann eine Formplattenbohrung aufweisen. Die Einspritzdüse kann in der Formplattenbohrung angeordnet sein. Die Formplattenbohrung kann so ausgebildet sein, dass zwischen der Einspritzdüse und der Formplatte zumindest abschnittsweise ein Spalt gebildet ist. Bevorzugt ist der Spalt permanent evakuiert. Mit anderen Worten herrscht zumindest während des Betriebs der Spritzgußform ein Vakuum in dem Spalt. Hiermit lässt sich eine besonders gute thermische Isolierung der Einspritzdüse gegenüber der Formplatte realisieren. Dadurch wird in effektiver Weise ein vorzeitiges Ausvulkanisieren des Spritzguts im Inneren der Einspritzdüse verhindert.

Zusammenfassend sind im Rahmen der vorliegenden Erfindung folgende Ausführungsformen besonders bevorzugt:
Ausführungsform 1: Einspritzdüse zum Einbringen von Spritzgut in eine Spritzgußform, wobei die Einspritzdüse einen Düsenkörper und eine Düsenspitze aufweist, wobei die Düsenspitze mit dem Düsenkörper formschlüssig verbunden ist.
Ausführungsform 2: Einspritzdüse nach der vorhergehenden Ausführungsform, wobei die Düsenspitze mit dem Düsenkörper mittels einer Schraubverbindung verbunden ist.
Ausführungsform 3: Einspritzdüse nach einer der vorhergehenden Ausführungsformen, wobei die Düsenspitze in den Düsenkörper eingeschraubt ist.
Ausführungsform 4: Einspritzdüse nach einer der vorhergehenden Ausführungsformen, wobei die Düsenspitze mit dem Düsenkörper gasdicht verbunden ist.
Ausführungsform 5: Einspritzdüse nach einer der vorhergehenden Ausführungsformen, wobei die Düsenspitze einen Außenumfang mit mehreren zylindrischen Flächen aufweist.
Ausführungsform 6: Einspritzdüse nach der vorhergehenden Ausführungsform, wobei die mehreren zylindrischen Flächen zum Positionieren der Düsenspitze in einer Formplatte der Spritzgußform ausgebildet sind.
Ausführungsform 7: Einspritzdüse nach einem der beiden vorhergehenden Ansprüche, wobei sich die Düsenspitze entlang einer Längsachse erstreckt, wobei die mehreren zylindrischen Flächen entlang der Längsachse verteilt angeordnet sind.
Ausführungsform 8: Einspritzdüse nach einer der vorhergehenden Ausführungsformen, wobei die Düsenspitze ein dem Düsenkörper abgewandtes Vorderende aufweist, wobei das Vorderende kegelförmig ausgebildet ist.
Ausführungsform 9: Einspritzdüse nach der vorhergehenden Ausführungsform, wobei das Vorderende der Düsenspitze zum formschlüssigen Anliegen an eine Formplatte der Spritzgußform ausgebildet ist.
Ausführungsform 10: Einspritzdüse nach einer der vorhergehenden Ausführungsformen, wobei die Düsenspitze zum Zuführen des Spritzguts in die Spritzgußform eine Bohrung aufweist, wobei die Bohrung mindestens einen ersten Durchmesser und einen zweiten Durchmesser aufweist, wobei der erste Durchmesser größer als der zweite Durchmesser. ist
Ausführungsform 11: Einspritzdüse nach der vorhergehenden Ausführungsform, wobei die Düsenspitze mindestens einen hinteren Abschnitt und einen vorderen Abschnitt aufweist, wobei der hintere Abschnitt innerhalb des Düsenkörpers angeordnet ist und der vordere Abschnitt außerhalb des Düsenkörpers angeordnet ist.
Ausführungsform 12: Einspritzdüse nach der vorhergehenden Ausführungsform, wobei der erste Durchmesser der Bohrung in dem hinteren Abschnitt angeordnet ist und der zweite Durchmesser in dem vorderen Abschnitt angeordnet ist.
Ausführungsform 13: Einspritzdüse nach einem der drei vorhergehenden Ansprüche, wobei der Düsenkörper einen Zufuhrkanal zum Zuführen des Spritzguts zu der Düsenspitze aufweist.
Ausführungsform 14: Einspritzdüse nach der vorhergehenden Ausführungsform, wobei sich der Zufuhrkanal entlang einer Zufuhrkanalachse erstreckt.
Ausführungsform 15: Einspritzdüse nach einer der vorhergehenden Ausführungsformen, wobei die Einspritzdüse so ausgebildet ist, dass die Einspritzdüse ortsfest in einer Düsenhalteplatte der Spritzgußform gehalten ist.
Ausführungsform 16: Einspritzdüse nach der vorhergehenden Ausführungsform, wobei der Düsenkörper einen Anschlag aufweist, der zum Eingreifen in eine in der Düsenplatte der Spritzgußform ausgebildete Nut ausgebildet ist.
Ausführungsform 17: Einspritzdüse nach einer der vorhergehenden Ausführungsformen, wobei die Einspritzdüse mindestens eine Dichtung aufweist, wobei die Dichtung an einem der Düsenspitze abgewandten Hinterende des Düsenkörpers angeordnet ist. Ausführungsform 18: Einspritzdüse nach der vorhergehenden Ausführungsform, wobei die Dichtung zum Vorspannen der Einspritzdüse in Richtung zu einer Formplatte der Spritzgußform ausgebildet ist.
Ausführungsform 19: Einspritzdüse nach einer der vorhergehenden Ausführungsformen, wobei der Düsenkörper einen Kernteil und eine Hülse aufweist, wobei der Kernteil in der Hülse angeordnet ist und mit dieser verbunden, insbesondere unlösbar verbunden, ist.
Ausführungsform 20: Einspritzdüse nach Einspritzdüse nach der vorhergehenden Ausführungsform, wobei der Düsenkörper mindestens einen Kühlkanal aufweist.
Ausführungsform 21: Einspritzdüse nach der vorhergehenden Ausführungsform, wobei der Kühlkanal in Form einer doppelgängigen Kühlspirale ausgebildet ist.
Ausführungsform 22: Einspritzdüse nach einem der beiden vorhergehenden Ansprüche, wobei der Kühlkanal von einer Nut gebildet ist, die in einer Außenfläche des Kernteils ausgebildet ist, wobei die Nut nach außen von der Hülse verschlossen ist.
Ausführungsform 23: Spritzgußform für Spritzgut mit mindestens einer Formplatte, die einen Einspritzkanal aufweist, der in einer Einspritzöffnung mündet, und mit einer Einspritzdüse nach einer der vorhergehenden Ausführungsformen.
Ausführungsform 24: Spritzgußform nach der vorhergehenden Ausführungsform, wobei die Einspritzdüse gegenüber der Formplatte isoliert ist.
Ausführungsform 25: Spritzgußform nach der vorhergehenden Ausführungsform, wobei die Formplatte eine Formplattenbohrung aufweist, wobei die Einspritzdüse in der Formplattenbohrung angeordnet ist, wobei die Formplattenbohrung so ausgebildet ist, dass zwischen der Einspritzdüse und der Formplatte zumindest abschnittsweise ein Spalt gebildet ist.
Ausführungsform 26: Spritzgußform nach der vorhergehenden Ausführungsform, wobei der Spalt permanent evakuiert ist.

### Kurze Beschreibung der Figuren

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figur 1: eine erste Längsschnittdarstellung eines Ausführungsbeispiels einer Spritzgußform mit Einspritzdüse;
- Figur 2: eine zweite Längsschnittdarstellung der Spritzgußform mit Einspritzdüse;
- Figur 3: eine Vorderansicht der Spritzgußform mit Einspritzdüse und
- Figur 4: eine vergrößerte Ansicht eines Details C der Figur 2.

### Ausführungsbeispiele

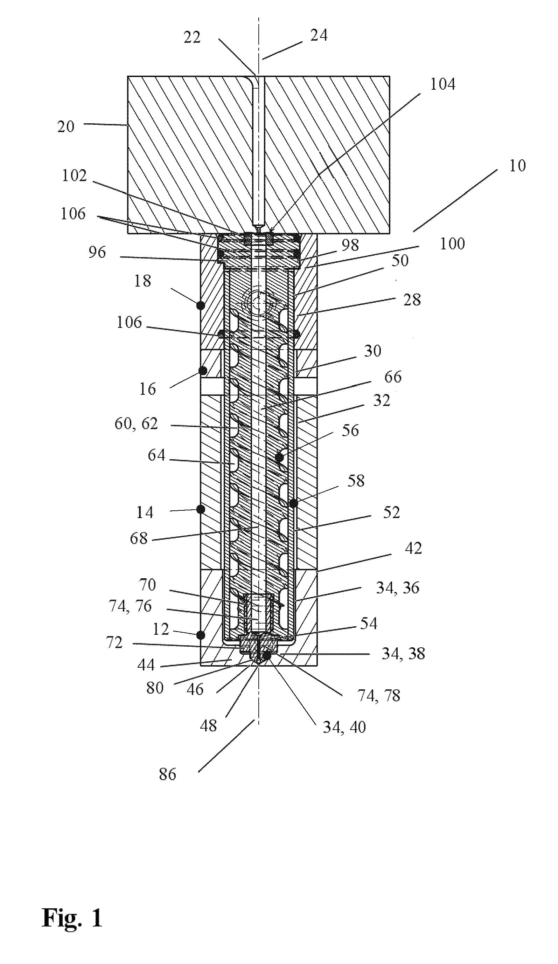

Ein Ausführungsbeispiel einer erfindungsgemäßen Spritzgußform 10 für Spritzgut ist in Fig. 1 dargestellt. Fig. 1 zeigt eine erste Längsschnittdarstellung eines Ausführungsbeispiels der Spritzgußform 10. Als Spritzgut kann beispielsweise Kunststoffmaterial, insbesondere Elastomere für die Herstellung von Kunststoffformen verwendet werden. Elastomere vernetzen bei Erhitzung einer bestimmten Temperatur, der so genannten Vernetzungstemperatur.

Die Spritzgußform 10 weist eine Formplatte 12, ein Heizplatte 14, eine Isolierplatte 16 und eine Düsenhalteplatte 18. Die Spritzgußform 10 steht mit einer Zufuhrvorrichtung 20 zum Zuführen von Spritzgut über eine Zufuhrbohrung 22 in Verbindung, wie nachstehend ausführlicher beschrieben wird. Die Formplatte 12, die Heizplatte 14, die Isolierplatte 16 und die Düsenhalteplatte 18 sind in dieser Reihenfolge derart aufeinander angeordnet, dass sie eine Längsachse 24 definieren, entlang der sie sich erstrecken.

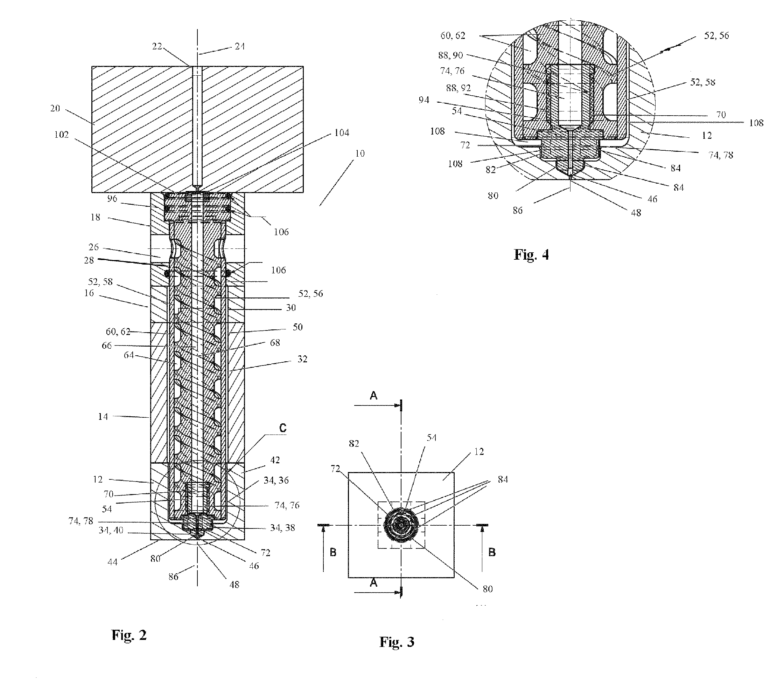

Figur 2 zeigt eine zweite Längsschnittdarstellung der Spritzgußform 10. Die zweite Längsschnittdarstellung ist im Vergleich zu der ersten Längsschnittdarstellung um 90 ° um die Längsachse 24 gedreht. In der Düsenhalteplatte 18 ist ein Kühlkanal 26 ausgebildet. Der Kühlkanal 26 ist senkrecht zu der Längsachse 24 orientiert und durchdringt die Düsenhalteplatte 18 vollständig. Die Düsenhalteplatte 18 weist in ihrer Mitte eine zylindrische Bohrung 28 auf, die sich in axialer Richtung bezüglich der Längsachse 24 erstreckt. Die Isolierplatte 16 weist in ihrer Mitte eine zylindrische Bohrung 30 auf, die sich in axialer Richtung bezüglich der Längsachse 24 erstreckt. Die Heizplatte 14 weist in ihrer Mitte eine zylindrische Bohrung 32 auf, die sich in axialer Richtung bezüglich der Längsachse 24 erstreckt.

Die Formplatte 12 weist in ihrer Mitte eine Formplattenbohrung 34 auf, die sich in axialer Richtung bezüglich der Längsachse 24 erstreckt. Die Formplattenbohrung 34 weist einen ersten Abschnitt 36, einen zweiten Abschnitt 38 und einen dritten Abschnitt 40 auf. Der erste Abschnitt 36 befindet sich an einem der Heizplatte 14 zugewandten Hinterende 42 der Formplatte 12. Der dritte Abschnitt 40 befindet sich an einem der Heizplatte 14 abgewandten Vorderende 44 der Formplatte 12. Der zweite Abschnitt 38 befindet sich zwischen dem ersten Abschnitt 36 und dem dritten Abschnitt 40 in axialer Richtung bezüglich der Längsachse 24 gesehen. Der erste Abschnitt 36 der Formplattenbohrung 34 der Formplatte 12, die Bohrung 32 der Heizplatte 14, die Bohrung 30 der Isolierplatte 16 und die Bohrung 32 der Düsenhalteplatte 18 weise einen identischen Durchmesser auf. Der zweite Abschnitt 38 der Formplattenbohrung 34 der Formplatte weist einen Durchmesser auf, der kleiner als der Durchmesser des ersten Abschnitts 36 der Formplattenbohrung 34 der Formplatte 12 ist. Der dritte Abschnitt 40 der Formplattenbohrung 34 der Formplatte weist einen Durchmesser auf, der kleiner als der Durchmesser des zweiten Abschnitts 38 der Formplattenbohrung 34 der Formplatte 12 ist. Der dritte Abschnitt 40 ist kegelförmig ausgebildet, so dass sich sein Durchmesser in Richtung zu dem Vorderende 44 verjüngt. Die Formplatte 12 weist weiterhin einen Einspritzkanal 46 auf, der sich in Richtung zu dem Vorderende 44 an den dritten Abschnitt 40 anschließt. De Einspritzkanal 46 mündet in einer Einspritzöffnung 48. Die Einspritzöffnung 48 steht mit einem Formnest in Verbindung, das von der Formplatte 12 und einer weiteren Formplatte begrenzt ist (nicht im Detail gezeigt).

Die Bohrungen 28, 30, 32 und die Formplattenbohrung 34 dienen der Aufnahme einer Einspritzdüse 50 zum Einbringen von Spritzgut in die Spritzgußform 10 wie nachstehend näher beschrieben wird. Die Einspritzdüse 50 weist einen Düsenkörper 52 und eine Düsenspitze 54 auf. Der Düsenkörper 52 weist einen Kernteil 56 und eine Hülse 58 auf. Die Hülse 58 ist zylindrisch ausgebildet. Der Kernteil 56 ist im Inneren der Hülse 58 angeordnet. Der Kernteil 56 ist mit der Hülse 58 verbunden. Der Kernteil 56 ist mit der Hülse 58 insbesondere unlösbar verbunden, beispielsweise verschweißt oder verlötet. Der Düsenkörper 52 weist einen Kühlkanal 60 auf. Der Kühlkanal 60 ist in Form einer doppelgängigen Kühlspirale 62 ausgebildet. Der Kühlkanal 60 ist beispielsweise von einer Nut 64 gebildet, die in einer Außenfläche des Kernteils 56 ausgebildet ist. Die Nut 64 ist nach außen von der Hülse 58 verschlossen. Der Düsenkörper 52 weist weiterhin einen Zufuhrkanal 66 zum Zuführen des Spritzguts zu der Düsenspitze 54 auf. Der Zufuhrkanal 66 erstreckt sich entlang einer Zufuhrkanalachse 68. Die Zufuhrkanalachse 68 überlappt mit der Längsachse 24 in einem Zustand, in dem die Einspritzdüse 50 in den Bohrungen 28, 30, 32 und der Formplattenbohrung 34 der Spritzgußform 10 eingesetzt ist.

Die Düsenspitze 54 weist einen hinteren Abschnitt 70 und einen vorderen Abschnitt 72 auf. Zum Zuführen des Spritzguts in die Spritzgußform 10 weist die Düsenspitze 54 eine Bohrung 74 auf. Die Bohrung 74 weist mindestens einen ersten Durchmesser 76 und einen zweiten Durchmesser 78 auf. Der erste Durchmesser 76 ist größer als der zweite Durchmesser 78. Der erste Durchmesser 76 ist in dem hinteren Abschnitt 70 angeordnet. Der zweite Durchmesser 78 ist in dem vorderen Abschnitt 72 angeordnet. Die Düsenspitz 54 weist weiterhin ein dem Düsenkörper 52 abgewandtes Vorderende 80 auf. Das Vorderende 80 ist kegelförmig ausgebildet und befindet sich an dem vorderen Abschnitt 72. Das Vorderende 80 ist somit zum Anliegen an die Formplatte 12 ausgebildet, wie nachstehend ausführlicher beschrieben wird.

Figur 3 zeigt eine Vorderansicht der Spritzgußform 10. Die Düsenspitze 54 weist weiterhin einen Außenumfang 82 mit mehreren zylindrischen Flächen 84 auf. Die zylindrischen Flächen 84 sind zum Positionieren der Düsenspitze 54 in der Formplatte 12 der Spritzgußform 10 ausgebildet, wie nachstehend ausführlicher beschrieben wird. Insgesamt erstreckt sich die Düsenspitze 54 entlang einer Längsachse 86. Die zylindrischen Flächen 84 sind entlang der Längsachse 86 verteilt angeordnet.

Figur 4 zeigt eine vergrößerte Ansicht eines Details C der Figur 2. Figur 4 zeigt insbesondere die Düsenspitze 54 und einen Teil des Düsenkörpers 52. Wie aus Figur 4 gut zu erkennen ist, ist die Düsenspitze 54 mit dem Düsenkörper 52 formschlüssig verbunden. Genauer ist die Düsenspitze 54 mit dem Düsenkörper 52 mittels einer Schraubverbindung 88 verbunden. Beispielsweise weist der hintere Abschnitt 70 ein Außengewinde 90 auf und der Düsenkörper 52 weist ein Innengewinde 92 an einem der Düsenspitze 54 zugewandten Vorderende 94 auf. Die Düsenspitze 54 ist dann in den Düsenkörper 52 eingeschraubt. Entsprechend ist die Schraubverbindung 88 mittels des Außengewindes 90 und des Innengewindes 92 realisiert, die ineinandergreifen. Dadurch ist die Düsenspitze 54 mit dem Düsenkörper 52 gasdicht verbunden. Des Weiteren ist dadurch der hintere Abschnitt 70 der Düsenspitze 54 innerhalb des Düsenkörpers 52 angeordnet, wohingegen der vordere Abschnitt 72 außerhalb des Düsenkörpers 52 angeordnet ist. Die formschlüssige Verbindung der Düsenspitze 54 mit dem Düsenkörper 52 wirkt auf Grund der Schraubverbindung 88 einer relativen Bewegung der Düsenspitze 54 und des Düsenkörpers 52 zueinander in einer ausschließlich axialen Richtung bezüglich der Zufuhrkanalachse 66 des Düsenkörpers 52 und der Längsachse 86 der Düsenspitze 54 entgegen. Der Formschluss lässt lediglich eine Kombination aus einer axialen Bewegung und einer rotatorischen Bewegung der Düsenspitze 54 und des Düsenkörpers 52 zueinander bezüglich der Zufuhrkanalachse 66 des Düsenkörpers 52 und der Längsachse 86 der Düsenspitze 54 zu. Eine derartige Kombination aus einer axialen Bewegung und einer rotatorischen Bewegung der Düsenspitze 54 und des Düsenkörpers 52 zueinander erfolgt insbesondere bei einem Einschrauben der Düsenspitze 54 in den Düsenkörper 52 oder bei einem Herausschrauben der Düsenspitze 54 aus den Düsenkörper 52. Der erfindungsgemäß vorgesehene Formschluss zwischen der Düsenspitze 54 und dem Düsenkörper 52 verhindert somit eine rein translatorische Bewegung der Düsenspitze 54 und des Düsenkörpers 52 zueinander in einer axialen Richtung bezüglich der Zufuhrkanalachse 66 des Düsenkörpers 52 und der Längsachse 86 der Düsenspitze 54.

Die Einspritzdüse 50 ist in den Bohrungen 28, 30, 32 und der Formplattenbohrung 34 der Spritzgußform 10 eingesetzt. Die Einspritzdüse 50 ist so ausgebildet, dass die Einspritzdüse 50 ortsfest in der Düsenhalteplatte 18 der Spritzgußform 10 gehalten ist. So weist zum Verhindern einer Drehung der Einspritzdüse 50 in der Spritzgußform 10 der Düsenkörper 52 außen an einem der Düsenspitze 54 abgewandten hinteren Abschnitt 96 einen Anschlag 98 auf. Der Anschlag 98 ist zum Eingreifen in eine in der Düsenhalteplatte 18 der Spritzgußform 10 ausgebildete Nut 100 ausgebildet. Somit wird eine Verdrehsicherung realisiert, welche ein verdrehen des Düsenkörpers 52 beim Herausschrauben oder Hineinschrauben der Düsenspitze 54verhindert und somit die richtige Lage der doppelgängigen Kühlspirale 62 zu dem Kühlkanal 26 in der Düsenhalteplatte 18 gewährleistet. Des Weiteren weist die Einspritzdüse 50 an einem der Düsenspitze 54 abgewandten Hinterende 102 eine Dichtung 104 auf. Die Dichtung 104 ist zum Vorspannen der Einspritzdüse 50 in Richtung zu der Formplatte 12 der Spritzgußform 10 ausgebildet. Beispielsweise ist die Einspritzdüse 50 zwischen der Spritzgußform 10 und der Zufuhrvorrichtung 20 zum Zuführen von Spritzgut zu der Einspritzdüse 50 eingespannt, wobei sich die Dichtung 104 an der Zufuhrvorrichtung 20 abdrückt und so die Einspritzdüse 50 in Richtung zu der Formplatte 12 der Spritzgußform 10 vorspannt.

Zum Verhindern eines Entweichens einer Kühlflüssigkeit aus den Kühlkanälen 26, 60 sind zwischen der Düsenhalteplatte 18 und dem Düsenkörper 52 Dichtungen 106 angeordnet. Beispielsweise ist eine Dichtung 106 unterhalb des Kühlkanals 26 außen an dem Düsenkörper 52 angeordnet und sind zwei Dichtungen 106 oberhalb des Kühlkanals 26 außen an dem Düsenkörper 52 angeordnet.

Das kegelförmige Vorderende 80 der Düsenspitze 54 ist dabei innerhalb des kegelförmigen Abschnitts 40 der Formplattenbohrung 34 angeordnet. Mittels der zylindrischen Flächen 84 ist der Düsenspitze 54 in der Formplatte 12 der Spritzgußform 10 positioniert. ist Die Düsenspitze 54 liegt mit den zylindrischen Flächen 84 in der Formplatte 12 der Spritzgußform 10 formschlüssig an. Die Einspritzdüse 50 ist dabei gegenüber der Formplatte 12 thermisch isoliert. Die Formplattenbohrung 34 ist so ausgebildet, dass zwischen der Einspritzdüse 50 und der Formplatte 12 zumindest abschnittsweise ein Spalt 108 gebildet ist. Die Einspritzdüse 50 kommt somit mit der Formplatte 12 nur an den zylindrischen Flächen 84 der Düsenspitze 54 in Berührung. Beispielsweise zeigt Figur 4, dass die Düsenspitze 54 mit den zylindrischen Flächen 84 nur rechts bezogen auf die Darstellung der Figur 4 in der Formplattenbohrung 34 anliegt und links der Spalt 108 gebildet ist. Der Spalt 108 ist permanent evakuiert, so dass dieser thermisch isolierend wirkt.

Nachstehend wird die Betriebsweise der Spritzgußform 10 beschrieben. Mittels der Zufuhrvorrichtung 20 wird Spritzgut aus der Zufuhrbohrung 22 in den Zufuhrkanal 66 in dem Düsenkörper 52 eingebracht. Das Spritzgut fließt aus dem Zufuhrkanal 66 in die Bohrung 74 der Düsenspitze 54. Optional kann in dem Zufuhrkanal 66 eine Nadel (nicht näher gezeigt) angeordnet sein. Die Nadel ist axial bezüglich der Zufuhrkanalachse 68 verschiebbar. Die Düsenspitze 54 ist so ausgebildet, dass die Bohrung 74 mittels der Nadel wahlweise verschließbar oder freigebbar ist. Insbesondere kann die Bohrung 74 durch eine axiale Verschiebung der Nadel in Richtung zu der Düsenspitze 54 verschlossen werden und durch eine axiale Verschiebung der Nadel in Richtung von der Düsenspitze 54 weg freigegeben werden. Dies ermöglicht eine Unterbrechung des Förderstroms des Spritzguts. Dies ist beispielsweise von Interesse, falls die durch Spritzguß herzustellenden Bauteile nacheinander hergestellt werden sollen.

Aus der Bohrung 74 gelangt das Spritzgut in den Einspritzkanal 46 der Formplatte 12. Der Einspritzkanal 46 mündet in der Einspritzöffnung 48. Die Einspritzöffnung 48 steht mit einem Formnest in Verbindung, das von der Formplatte 12 und einer weiteren Formplatte begrenzt ist (nicht im Detail gezeigt). In dieses Formnest gelangt das Spritzgut über den Einspritzkanal 46 und die Einspritzöffnung 48. Das Formnest gibt dabei die Form des durch Spritzguß herzustellenden Bauteils vor. Während dieses Herstellungsprozesses strömt eine Kühlflüssigkeit durch die Kühlkanäle 26, 60 und hält so die Einspritzdüse 50 auf einer vergleichsweisen niedrigen Temperatur. Die Temperatur ist so niedrig, dass das Spritzgut nicht im inneren der Einspritzdüse 50 ausvulkanisiert und diese so verstopft. Da sich die Einspritzdüse 50 von der kalten Düsenhalteplatte 18 über die Isolierplatte 16.und durch die Heizplatte 14 und bis in die heiße Formplatte 12 hinein erstreckt, sind Maßnahmen getroffen, um die Temperatur der Einspritzdüse niedrig 50 zu halten. Ein Teil dieser Maßnahmen ist das Durchleiten von Kühlflüssigkeit durch die Kühlkanäle 26, 60. Der Kühlkanal 60 erstreckt sich jedoch nicht bis zu der Düsenspitz 54. Um zu verhindern, dass das Spritzgut im der Bohrung 74 der Düsenspitze 74 ausvulkanisiert, ist der Spalt 108 vorgesehen. Somit ist die Einspritzdüse 50 auch im Bereich der Düsenspitze 54 gegenüber dem heißen Bereich der Spritzgußform 10 thermisch isoliert durch den Spalt 108, in dem ein permanentes Vakuum wirkt.

### Bezugszeichenliste

- 10: Spritzgußform
- 12: Formplatte
- 14: Heizplatte
- 16: Isolierplatte
- 18: Düsenhalteplatte
- 20: Zufuhrvorrichtung
- 22: Zufuhrbohrung
- 24: Längsachse
- 26: Kühlkanal
- 28: Bohrung
- 30: Bohrung
- 32: Bohrung
- 34: Formplattenbohrung
- 36: erster Abschnitt
- 38: zweiter Abschnitt
- 40: dritter Abschnitt
- 42: Hinterende
- 44: Vorderende
- 46: Einspritzkanal
- 48: Einspritzöffnung
- 50: Einspritzdüse
- 52: Düsenkörper
- 54: Düsenspitze
- 56: Kernteil
- 58: Hülse
- 60: Kühlkanal
- 62: Kühlspiral
- 64: Nut
- 66: Zufuhrkanal
- 68: Zufuhrkanalachse
- 70: hinterer Abschnitt
- 72: vorderer Abschnitt
- 74: Bohrung
- 76: erster Durchmesser
- 78: zweiter Durchmesser
- 80: Vorderende
- 82: Außenumfang
- 84: zylindrische Flächen
- 86: Längsachse
- 88: Schraubverbindung
- 90: Außengewinde
- 92: Innengewinde
- 94: Vorderende
- 96: hinterer Abschnitt
- 98: Anschlag
- 100: Nut
- 102: Hinterende
- 104: Dichtung
- 106: Dichtung
- 108: Spalt

## Patentansprüche

1. Einspritzdüse (50) zum Einbringen von Spritzgut in eine Spritzgußform (10), wobei die Einspritzdüse (50) einen Düsenkörper (52) und eine Düsenspitze (54) aufweist, wobei die Düsenspitze (54) mit dem Düsenkörper (52) formschlüssig verbunden ist.

2. Einspritzdüse (50) nach dem vorhergehenden Anspruch, wobei die Düsenspitze (54) in den Düsenkörper (52) eingeschraubt ist.

3. Einspritzdüse (50) nach einem der vorhergehenden Ansprüche, wobei die Düsenspitze (54) einen Außenumfang (82) mit mehreren zylindrischen Flächen (84) aufweist.

4. Einspritzdüse (50) nach einem der vorhergehenden Ansprüche, wobei die Düsenspitze (54) ein dem Düsenkörper (52) abgewandtes Vorderende (80) aufweist, wobei das Vorderende (80) kegelförmig ausgebildet ist, wobei das Vorderende (80) der Düsenspitze (54) zum formschlüssigen Anliegen an eine Formplatte (12) der Spritzgußform (10) ausgebildet ist.

5. Einspritzdüse (50) nach einem der vorhergehenden Ansprüche, wobei die Düsenspitze (54) zum Zuführen des Spritzguts in die Spritzgußform (10) eine Bohrung (74) aufweist, wobei die Bohrung (74) mindestens einen ersten Durchmesser (76) und einen zweiten Durchmesser (78) aufweist, wobei der erste Durchmesser (76) größer als der zweite Durchmesser (78) ist, wobei die Düsenspitze (54) mindestens einen hinteren Abschnitt (70) und einen vorderen Abschnitt (72) aufweist, wobei der hintere Abschnitt (70) innerhalb des Düsenkörpers (52) angeordnet ist und der vordere Abschnitt (72) außerhalb des Düsenkörpers (52) angeordnet ist, wobei der erste Durchmesser (76) der Bohrung (74) in dem hinteren Abschnitt (70) angeordnet ist und der zweite Durchmesser (78) in dem vorderen Abschnitt (72) angeordnet ist.

6. Einspritzdüse (50) nach einem der vorhergehenden Ansprüche, wobei die Einspritzdüse (50) so ausgebildet ist, dass die Einspritzdüse (50) ortsfest in einer Düsenhalteplatte (18) der Spritzgußform (10) gehalten ist.

7. Einspritzdüse (50) nach einem der vorhergehenden Ansprüche, wobei die Einspritzdüse (50) mindestens eine Dichtung (104) aufweist, wobei die Dichtung (104) an einem der Düsenspitze (54) abgewandten Hinterende (102) des Düsenkörpers (52) angeordnet ist.

8. Einspritzdüse (50) nach dem vorhergehenden Anspruch, wobei die Dichtung (104) zum Vorspannen der Einspritzdüse (50) in Richtung zu einer Formplatte (12) der Spritzgußform (10) ausgebildet ist.

9. Einspritzdüse (50) nach einem der vorhergehenden Ansprüche, wobei der Düsenkörper (52) einen Kernteil (56) und eine Hülse (58) aufweist, wobei der Kernteil (56) in der Hülse (58) angeordnet ist und mit dieser verbunden, insbesondere unlösbar verbunden, ist.

10. Einspritzdüse (50) nach dem vorhergehenden Anspruch, wobei der Düsenkörper (52) mindestens einen Kühlkanal (60) aufweist, wobei der Kühlkanal (60) in Form einer doppelgängigen Kühlspirale (62) ausgebildet ist.

11. Einspritzdüse (50) nach einem der beiden vorhergehenden Ansprüche, wobei der Kühlkanal (60) von einer Nut (64) gebildet ist, die in einer Außenfläche des Kernteils (56) ausgebildet ist, wobei die Nut (64) nach außen von der Hülse (58) verschlossen ist.

12. Spritzgußform (10) für Spritzgut mit mindestens einer Formplatte (12), die einen Einspritzkanal (46) aufweist, der in einer Einspritzöffnung (48) mündet, und mit einer Einspritzdüse (50) nach einem der vorhergehenden Ansprüche.

13. Spritzgußform (10) nach dem vorhergehenden Anspruch, wobei die Einspritzdüse (50) gegenüber der Formplatte (12) isoliert ist.

14. Spritzgußform (10) nach dem vorhergehenden Anspruch, wobei die Formplatte (2) eine Formplattenbohrung (34) aufweist, wobei die Einspritzdüse (50) in der Formplattenbohrung (34) angeordnet ist, wobei die Formplattenbohrung (34) so ausgebildet ist, dass zwischen der Einspritzdüse (50) und der Formplatte (12) zumindest abschnittsweise ein Spalt (108) gebildet ist.

15. Spritzgußform (10) nach dem vorhergehenden Anspruch, wobei der Spalt (108) permanent evakuiert ist.
